Europäisches Patentamt

European Patent Office

Office européen des brevets

(19)

(11) **EP 0 753 231 B1**

(12) **EUROPÄISCHE PATENTSCHRIFT**

(45) Veröffentlichungstag und Bekanntmachung des Hinweises auf die Patenterteilung:
**09.09.1998** Patentblatt **1998/37**

(21) Anmeldenummer: **95913892.6**

(22) Anmeldetag: **31.03.1995**

(51) Int Cl.$^6$: **H04N 1/403**, G06K 9/38

(86) Internationale Anmeldenummer:
**PCT/EP95/01209**

(87) Internationale Veröffentlichungsnummer:
**WO 95/27364 (12.10.1995 Gazette 1995/43)**

(54) **VERFAHREN UND VORRICHTUNG ZUM BINARISIEREN VON PIXEL-DATEN**

METHOD AND DEVICE FOR BINARISING PIXEL DATA

PROCEDE ET DISPOSITIF DE BINARISATION DES DONNEES DE PIXEL

(84) Benannte Vertragsstaaten:
**AT BE CH DE DK ES FR GB GR IE IT LI LU NL PT SE**

(30) Priorität: **31.03.1994 DE 4411248**

(43) Veröffentlichungstag der Anmeldung:
**15.01.1997** Patentblatt **1997/03**

(73) Patentinhaber: **SIEMENS AKTIENGESELLSCHAFT**
**80333 München (DE)**

(72) Erfinder:
- **WEBER, Wolfgang**
  **D-78315 Radolfzell 18 (DE)**
- **RÖHM, Eberhard**
  **D-78224 Singen (DE)**
- **BANHOLZER, Andreas**
  **D-78224 Singen (DE)**
- **HESSE, Walter**
  **D-78465 Konstanz (DE)**

(56) Entgegenhaltungen:
EP-A- 0 238 027          DE-A- 4 001 613
US-A- 4 675 909          US-A- 5 253 080

**Beschreibung**

Die vorliegende Erfindung betrifft ein Verfahren und eine Vorrichtung zum Binarisieren von Pixel-Daten.

Die vorliegende Erfindung bezieht sich auf das Gebiet der Bildvorbereitung für automatische Zeichenerkennungssysteme. Zeichenerkennungssysteme lassen sich grob in zwei Teilsysteme gliedern, von denen das erste die Aufgabe der Bildvorbereitung hat und das zweite die Aufgabe der eigentlichen Erkennung. Bei der Bildvorbereitung wird das zu erkennende Dokument, die sog. Vorlage, meßtechnisch erfaßt. Zu einem Abbild der Vorlage werden Textausschnitte, Zeilen und schließlich Einzelzeichen herauspräpariert und die dabei anfallenden Zeichenbilder von offensichtlich erkennbaren Störungen befreit. Die zu erkennenden Zeichen liegen zunächst im optischen Bereich vor und müssen für die weitere Verarbeitung geeignet gewandelt werden. Dies geschient mit einem Abtaster, vorzugsweise heute ein integrierter Halbleiter-Abtaster. Für die weitere Verarbeitung wird die kontinuierlich gemessene Schwärzung der Vorlage im allgemeinen unmittelbar nach der Abtastung in eine schwarz-weiß-Entscheidung umgewandelt. Vorzugsweise wird das vom Abtaster gelieferte analoge Signal zunächst durch einen Analog-Digital-Wandler in ein diskretes Signal umgewandelt und anschließend eine binäre Abbildung dieser Graubildvorlage, die den Bildinhalt für die Zeichenerkennung hinreichend getreu wiedergibt, erzeugt. Hintergrundhelligkeit und Schwärzung im Zeichenbereich könnten starken Schwankungen unterworfen sein. Während man bei der Hintergrundhelligkeit in den jeweils interessierenden Subregionen der Vorlage mit geringen Fluktationen rechnen kann, ändert sich die Schwärzung im Zeichenbereich häufig von Zeichen zu Zeichen und auch innerhalb der einzelnen Zeichen. Unterschiede der Hintergrundhelligkeit werden daher durch eine über größere Bildausschnitte einheitliche Regelung aufgefangen, während Unterschiede im Zeichenschwarz durch eine mehr lokal wirkende Regelung kompensiert werden.

Die lokale Steuerung der schwarz-weiß-Unterscheidung gemäß einer Binarisierungscharakteristik ist eine differenzierende Operation, die zur Entscheidung für die Schwärzung eines Bildelementes nicht nur dessen Grauwert, sondern auch die Grauwerte der Umgebung heranzieht. Die Größe des Umgebungsbereichs muß dabei in Übereinstimmung mit den Abmessungen der zu erkennenden Zeichen gewählt werden. Am einfachsten ist es, zunächst die mittlere Schwärzung im Umgebungsbereich zu bestimmen und ein Bildelement für schwarz zu erklären, wenn es schwärzer ist als die mittlere Schwärzung, und sonst für weiß. Zur Rauschunterdrückung sowohl im Bereich des Zeichenhintergrundes als auch des Zeichenschwarz ist es zusätzlich vorteilhaft eine Binarisierungskennlinie zu verwenden, die den Schwellwert Q im Bereich geringer mittlerer Schwärzung anhebt und ihn im Bereich größerer mittlerer Schwärzung senkt. Bei stärker schwankendem Zeichenkontrast kann es zweckmäßig sein, die Binarisierungskennlinie insgesamt nach dem in einer größeren Umgebung beobachteten Kontrast zu steuern und für kräftigen Druck eine von für schwachen Druck verschiedene Binarisierungskennlinie zu verwenden.

In der oben geschilderten Binarisierungsstufe der Bildvorbereitung wird die Nutzinformation für alle nachfolgenden Verarbeitungsschritte erzeugt. An dieser Stelle verlorene Information hat daher auf alle weiteren Verarbeitungsschritte Einfluß und schränkt die Leistungsfähigkeit des Gesamtsystems ein.

Ein bei der Binarisierung auftretendes Problem ist, daß bei einem empfindlich binarisierten Bild, das also mit einer für schwach gedruckte Zeichen ausgelegten Binarisierungscharakteristik bearbeitet worden ist, kontrastschwache Zeichen gut erkennbar sind, jedoch auch störende Strukturen und Musterungen deutlich zum Vorschein treten. Dagegen werden bei einem unempfindlich binarisierten Bild kontrastreiche Zeichen gut dargestellt, Störinformationen und Hintergrundrauschen dagegen werden unterdrückt. Schwierigkeiten treten dabei insbesondere in Adreßfeldern auf, deren Hintergrund mit einer Struktur hinterlegt ist. Aus der lokalen Betrachtung der Umgebung des Graubildes läßt sich in solchen Fällen kaum schließen, ob es sich bei einer Schwärzung um Schriftgut oder um ein störendes Hintergrundmuster handelt.

Aufgabe der vorliegenden Erfindung ist die Angabe eines Verfahrens und einer Vorrichtung zur Auswahl eines optimal binarisierten Bildes aus einer Anzahl von mit jeweils unterschiedlicher Binarisierungscharakteristik gebildeten Binärbildern.

Die Aufgabe wird erfindungsgemäß durch die Merkmale der Patentansprüche 1 und 6 gelöst.

Vorteilhafte Ausführungsformen der Erfindung sind den Unteransprüchen und der Beschreibung zu entnehmen.

Im folgenden wird die Erfindung anhand von Zeicnnungen genauer erläutert. Es zeigen:

Fig. 1     das Blockschaltbild einer erfindungsgemäßen Vorrichtung,

Fig. 2     das Blockschaltbild einer Binärdatenquelle, die eine Anzahl von n schwarz-weiß-Binärbildern liefert,

Fig. 3     ein Binarisierungsentscheidungsdiagramm,

Fig. 4     das Diagramm einer dynamischen Rauschschwelle,

Fig. 5     ein Beispiel für interessierende Regionen (ROI) auf einem Brief,

Fig. 6     Zählrichtungen für die Ermittlung von schwarz-weiß-Übergängen,

Fig. 7     ein Auswertungsdiagramm,

Fig. 8     eine Sequenz von unterschiedlich binarisierten Bildern,

Fig. 9     ein Blockschaltbild einer weiteren erfindungsgemäßen Vorrichtung.

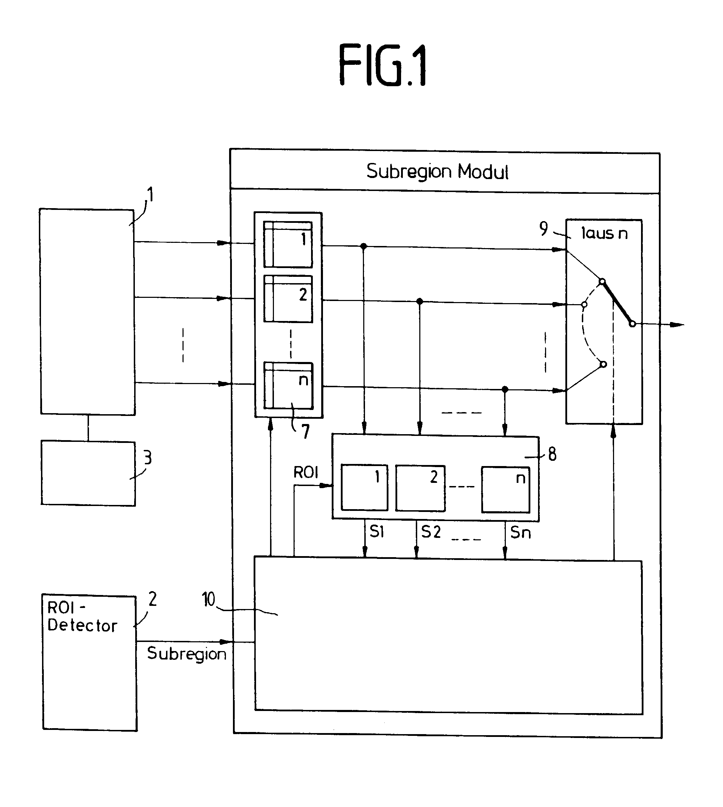

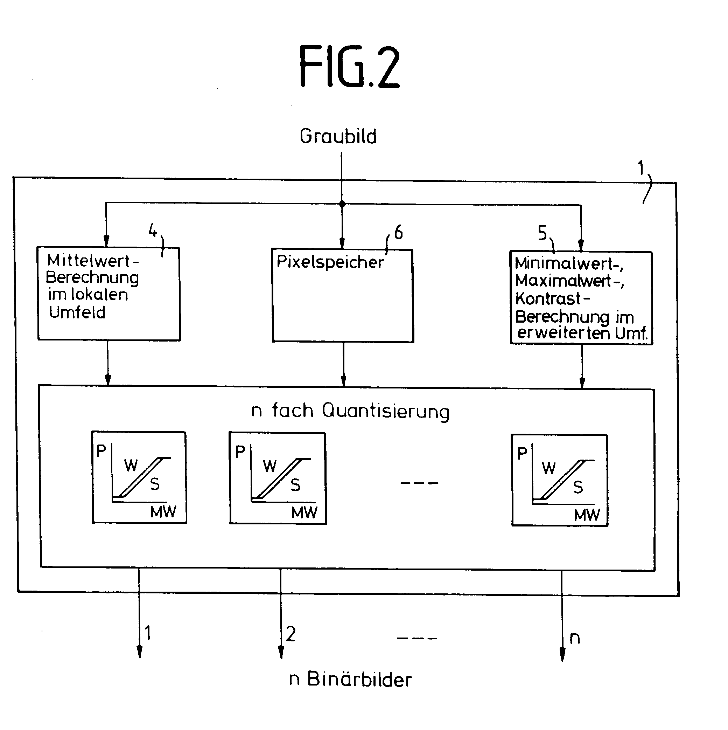

Das in Fig. 1 dargestellte Blockschaltbild einer erfindungsgemäßen Vorrichtung weist eine Binärdatenquelle 1 und ein ROI-Detektor-Modul 2, um vorgegebene Teilmengen von Binärbildpunkten, d.h. interessierende Bildausschnitte (ROI - region of interest) zu liefern, auf. Wie Fig. 2 zeigt, werden in der Binärdatenquelle 1 n Binärbilder parallel erzeugt, typischerweise vier bis sechs. Die Binärdatenquelle 1 bezieht Pixel-Daten des Graubildes von einer nicht genauer dargestellten Grauwert-Pixeldatenquelle, insbesondere Bildeingabevorrichtung 3, z. B. einem Scanner. Grundsätzlich ist bei der erfindungsgemäßen Vorrichtung auch eine sequentielle Erzeugung von n Binärbildern möglich.

Die n Binärbilder weisen jeweils unterschiedliche Binarisierungscharakteristiken auf. Wie an sich bereits bekannt, wird für die Binarisierung eines Graubildes im lokalen Umfeld jedes Pixels eine Mittelwertbildung 4 vorgenommen. Das lokale Umfeld ist in seiner Ausdehnung parametrisierbar. Als empirisch geeignet wird für Schriftgut im Anschriftenfeld von Briefen die Feldgröße von 1 mm² angesehen. Vorzugsweise wird der Mittelwert als der arithmetische mittlere Grauwert von allen bzw. von einer repräsentativen Teilmenge der im lokalen Umfeld befindlichen Bildpunkte gebildet, wobei der zu binarisierende Bildpunkt im Mittelpunkt des lokalen Umfeldes liegt.

Als weitere Meßwerte für die Binarisierung werden Minimalwert, Maximalwert und Kontrast 5 aus einem erweiterten Umfeld, das vorzugsweise symmetrisch um den zu binarisierenden Bildpunkt liegt, ermittelt. Dabei wird dem dunkelsten Grauwert im erweiterten Umfeld der Minimalwert MIN zugeordnet. Vorzugsweise wird der Maximalwert $MAX_{abs}$ dem absolut hellsten Grauwert im erweiterten Umfeld zugeordnet. Für die Berechnung des Kontrastes wird vorzugsweise aus Submaximas der minimalste Wert $MAX_k$ ermittelt; zum Beispiel bei einem 3 x 3 erweiterten Umfeld aus drei Spalten Submaximas.

Der Kontrast ist dann folgendermaßen festzulegen

$$K = \frac{MAX_K - MIN}{MAX_K}$$

Durch diese Festlegung von K mittels $MAX_K$ wird der Einfluß des Maximalwertes des Graubildes auf den Kontrast und somit auf das Binarisierungsergebnis träger gemacht. Helle Ausreißer im Graubild sowie Kantenübergänge, die z. B. bei Labeln oder Glanzfenstern bei Briefen auftreten, würden sonst eine zu starke Kontraständerung mit sich bringen. Eine merkliche Kontraständerung soll aber nur durch das Schriftgut selbst hervorgerufen werden.

Im Pixelspeicher 6 wird jeder Bildpunkt des Graubildes so lange zwischengespeichert, bis für ihn Mittelwert, Minimum, $MAX_K$ und Kontrast berechnet sind.

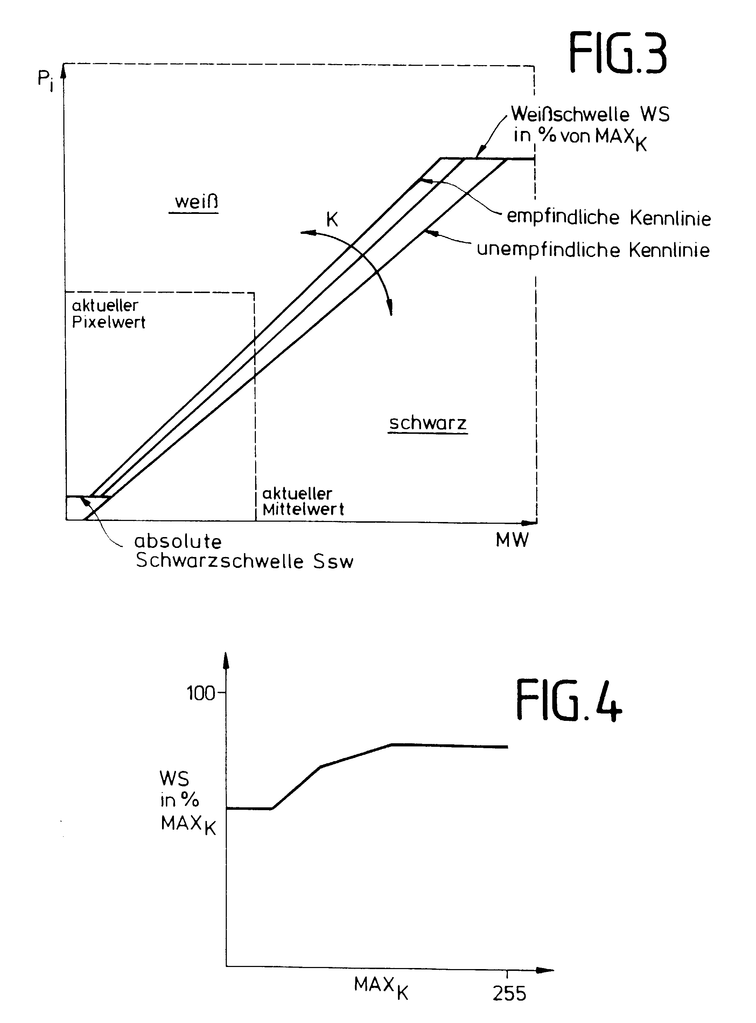

Vorzugsweise können die Meßwerte Mittel-, Minimal-, Maximalwert und Kontrast für alle n Bilder gemeinsam ermittelt werden. In diesem Fall unterscheiden sich die Binärbilder nur durch die weiteren Parameter des im folgenden dargestellten Entscheidungsdiagramms, Fig. 3.

Im Entscheidungsdiagramm sind für jeden zu binarisierenden Pixel $P_i$ auf der Abszisse der aktuelle Mittelwert und auf der Ordinate der aktuelle Pixelwert aufgetragen. In Fig. 3 sind drei unterschiedliche Kennlinien drgestellt, wobei mit zunehmender Steigung des linearen Teils die Empfindlichkeit der Binarisierung wächst. Oberhalb einer Kennlinie wird für einen gegebenen Pixel mit einem gegebenen Mittelwert der Wert "weiß" unterhalb der Kennlinie der Wert "schwarz" zugeordnet. Allgmein wird bei schwachem Kontrast eine empfindliche Kennlinie, bei starkem Kontrast eine unempfindliche Kennlinie gewählt.

Zur Rauschunterdrückung sind in Fig. 3 verschiedene Schwellen eingeführt:

Die Weiß-Schwelle WS ist in Abhängigkeit von $MAX_K$ angegeben. Typischerweise ist die Weißschwelle im Bereich von 70-85% $MAX_K$. Ist der aktuelle Pixelwert $P_i$ größer als diese Schwelle, so wird er zu weiß gesetzt, unabhängig von der Kennlinie.

Die absolute Schwarzschwelle SSW bewirkt, daß wenn der Pixelwert $P_i$ kleiner als die absolute Schwelle ist, er auf schwarz gesetzt wird.

Da sehr dunkle Adreßfelder im allgemeinen ein stärkeres Weißrauschen verursachen als hellere, ist es vorteilhaft, eine dynamische Weißrauschschwelle WS=f$(MAX_K)$ einzuführen, die in Abhängigkeit vom Maximalwert der Pixel $MAX_K$ das Weißrauschen stärker oder schwächer unterdrückt. In Fig. 4 ist ein Beispiel für eine solche dynamisierte Weißschwelle abgebildet, wobei ein Wertebereich für die Grauwerte von 8 bit angenommen wurde.

Erfindungsgemäß werden zur Binarisierung n verschiedene Kennlinien, vorzugsweise nach der Empfindlichkeit geordnet, verwendet, die zu n verschieden binarisierten Binärbildern führen. Diese n Bilder werden einem Bildspeicher 7 zugeführt, der interessante Ausschnitte ROI für die Analysevorrichtung 8 sowie Gesamtbilder für das Montierwerk 9 zur Verfügung stellt.

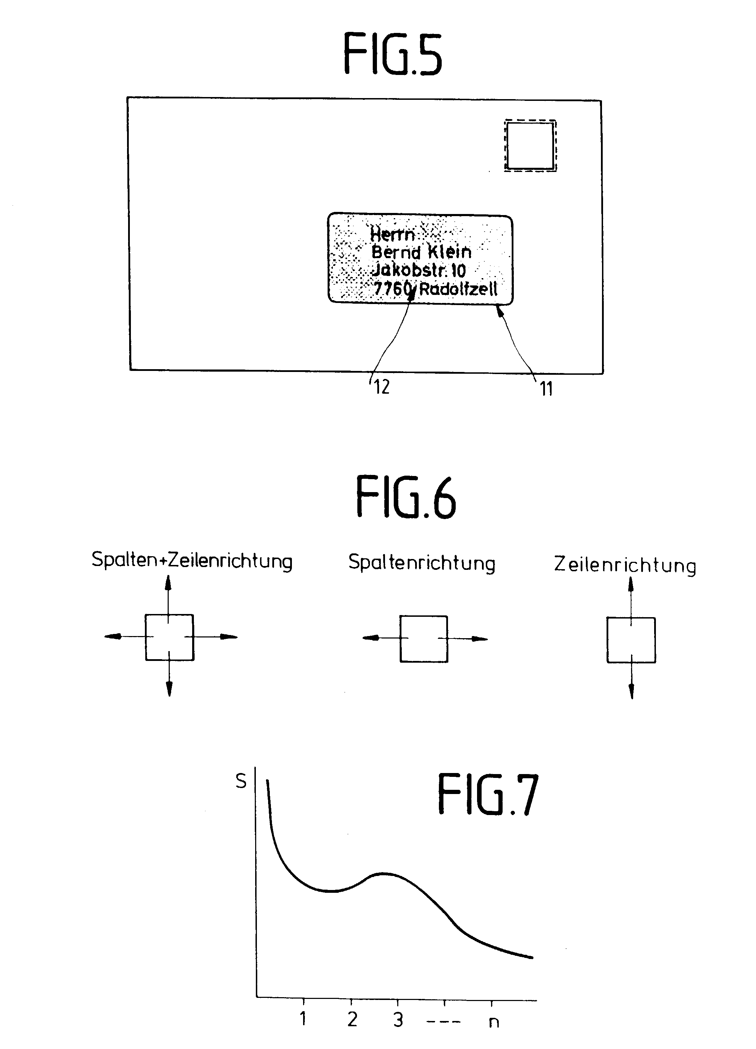

Fig. 5 zeigt ein Beispiel einer Vorlage mit einem interessanten Bildausschnitt 11, der einen Adreßblock 12 enthält. Grundsätzlich können die interessanten Bildausschnitte von verschiedenen Detektoren gewonnen werden, z. B. von einem Window-Detektor, der auf Briefen mit Glanzfenster die Koordinaten aus einem Glanzbild, das mit einem speziellen Scanner gewonnen wird, ermittelt; einem Labeldetektor, der Adreßaufkleber sucht; einem Detektor zur Adreßblocksuche, der mit Algorithmen die Zeilenstruktur sucht und adreßtypische Strukturen als interessante Subregion markiert; einem Farbinformationsdetektor, der eine interessante Subregion über eine Farbanalyse bestimmt; oder einen Konstantzonendetektor, der eine interessante Subregion über eine fest eingestellte Koordinatenvorgabe bestimmt.

In der Analysevorrichtung 8 werden für einen interessanten Bildausschnitt, der vom ROI-Detektor-Modul 2 bestimmt worden ist, für jedes der Binärbilder 1 bis n die Maßzahlen S1, S2, ..., Sn berechnet.

Für die Ermittlung der Maßzahl S wird die Anzahl der schwarzen Bildpunkte FS und die Anzahl der schwarz-weiß- bzw. weißschwarz-Übergänge Ü berechnet.

Die Maßzahl S ist definiert als $S = \frac{FS}{Ü}$.

Bei der Ermittlung von Ü kann die Anzahl der Übergänge pixelweise entweder in Spaltenrichtung oder in Zeilenrichtung oder in beiden Richtungen gezählt werden. Fig. 6 zeigt als Zählrichtungen zur Ermittlung der Übergänge Spalten- und Zeilenrichtung, Spaltenrichtung und Zeilenrichtung.

Trägt man die Maßzahl S für mit abnehmend empfindlicher Binarisierungscharakteristik binarisierte Binärbilder auf, so erhält man den in Fig. 7 dargestellten Kurvenverlauf. S weist bei einer sehr empfindlichen Binarisierungscharakteristik sehr hohe Werte auf. Das zugehörige Binärbild ist praktisch schwarz mit relativ wenigen schwarz-weiß-Übergängen. Mit abnehmender Empfindlichkeit nehmen die schwarz-weiß-Übergänge kräftig zu, was zu einem Absinken von S führt. Mit weiterer Verminderung der Empfindlichkeit der Binarisierungscharakteristik nimmt S wieder zu, da die Schriftinformation nun klar und deutlich erscheint. Bei weiterer Abnahme der Empfindlichkeit der Binarisierungscharakteristik zerfallen die Zeichen im binarisierten Bild weiter, so daß die Maßzahl S wieder abfällt. Im Ergebnis erhält man für S einen Kurvenverlauf mit einem relativen Maximum bei dem optimal erkennbaren Bild.

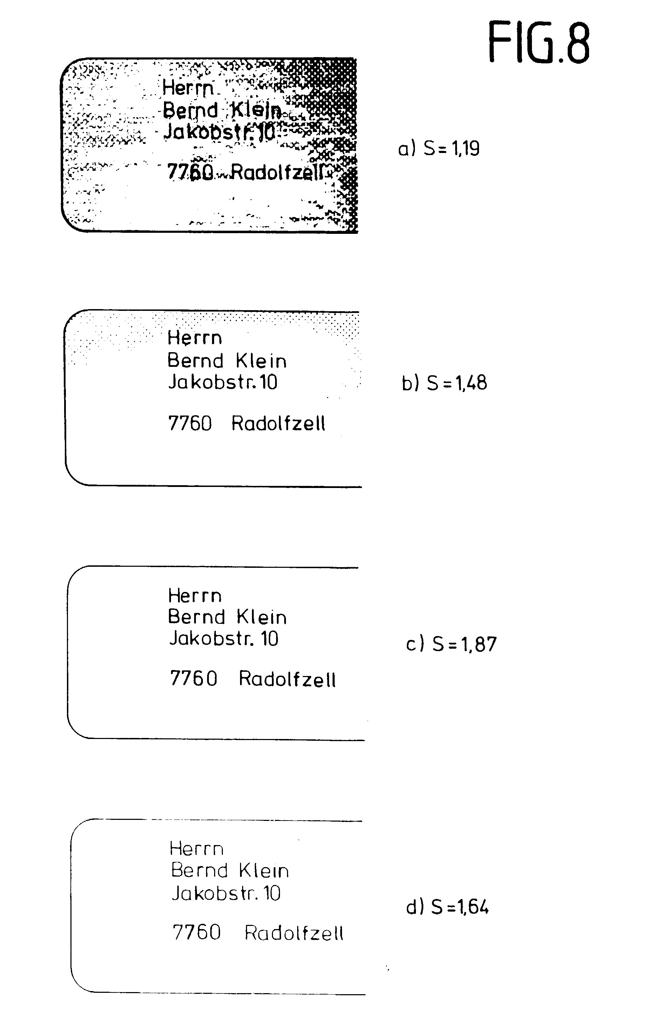

In Fig. 8 ist für eine Sequenz von vier Bildern eines Adreßfeldbereichs jeweils deren visuelle Repräsentation bei unterschiedlicher Binarisierungscharakteristik und der zugehörige Wert der Maßzahl S dargestellt. Es zeigt sich dabei, daß das visuell klarste Bild (C), dasjenige mit dem maximalen Wert S (S=1,87) ist.

Die von der Analysevorrichtung 8 gelieferten Maßzahlen S1 bis Sn werden in der Auswertevorrichtung 10 weiterverarbeitet, d.h. es wird aus den Maßzahlen S1 bis Sn das relative Maximum bestimmt und das Montierwerk 9 derart gesteuert, daß im Bereich der interessierenden Subregion das Binärbild mit dem maximalen S ausgegeben wird und für den Rest des Bildes ein Standardbild. Als Standardbild wird eines der n Binärbilder verwendet, das der zu erwartenden Vorlagenoberfläche angepaßt ist. Für den Fachmann ist es selbstverständlich, daß auch auf die Montierung im Montierwerk 9 verzichtet werden kann und in diesem Fall eine Ausgabe des gesamten Binärbildes mit der zum Maximum von S führenden Binarisierungscharakteristik erfolgen kann. Jedoch ist, da interessierende Subregionen häufig von der gesamten Vorlagenoberfläche unterschiedliche optische Charakteristika haben, eine Aufteilung und anschließende Montage des Gesamtbildes der Vorlage vorteilhaft.

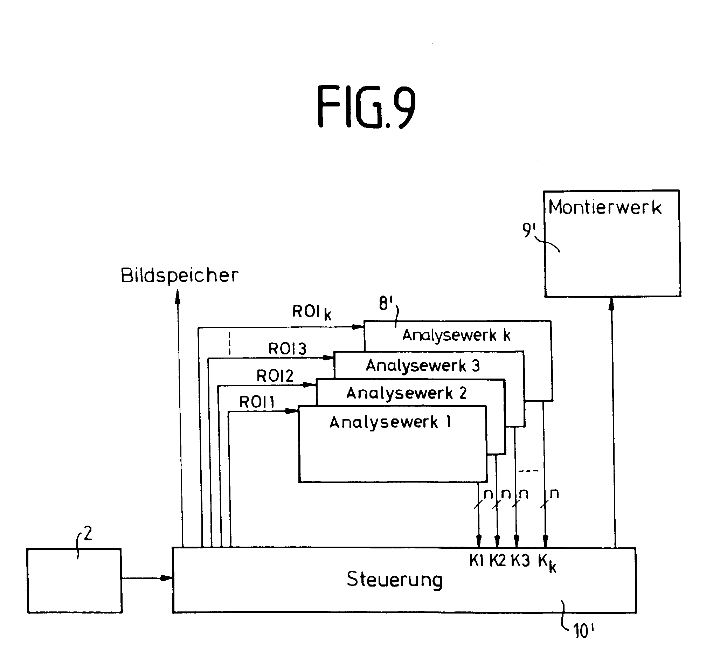

Für Vorlagen mit mehreren interessanten Subregionen ROI, z. B. Briefen mit mehreren Glanzfenstern oder Flats mit Labeln, ist eine Erweiterung der Erfindung auf Vorlagen mit mehreren interessanten Subregionen möglich. Für K interessante Subregionen wird die Analysevorrichtung vorzugsweise dazu K-fach realisiert. Fig. 9 zeigt eine Ausführungsform der Erfindung mit K Analysewerken 8', von denen jedes so wie oben beschrieben n Maßzahlen S1 bis Sn liefert. Es wird demnach für jede interessante Subregion eine separate Auswertung im zugehörigen Analysewerk vorgenommen. Damit wird erreicht, daß für jede interessierende Subregion ein optimal erkennbares Binärbild gefunden wird, daß beim Montieren ausgegeben wird. Fig. 9 zeigt, daß von dem ROI-Detektor-Modul 2, der Steuerung 10' Angaben über interessante Subregionen ROI1 bis ROIK gegeben werden, die zu einer Auswertung den Analysewerken 8' zugeführt werden. Das Montierwerk 9' wird von der Steuerung 10' gesteuert. Überlappungen von Subregionen, die von unterschiedlichen ROI-Detektoren gemeldet werden, werden durch Priorisieren der verschiedenen ROI-Detektoren beseitigt, so daß für die Analysewerke und das Montierwerk nur eindeutige Subregionen vorliegen.

## Patentansprüche

1. Verfahren zum Binarisieren von Pixel-Daten, dadurch gekennzeichnet,

   daß aus einem Satz von Grauwert-Pixeldaten eine Anzahl von schwarz-weißen Binärbildern mit jeweils unterschiedlich empfindlicher Binarisierungscharakteristik gebildet wird, daß für jedes dieser Binärbilder die Maßzahl

   $$S = \frac{FS}{Ü}$$

   berechnet wird, wobei FS die Anzahl schwarzer Binärbildpunkte und Ü die Anzahl der schwarz-weiß-Übergänge bezeichnet, daß eine Auswahl des Binärbildes als optimal efolgt, für das die Maßzahl S maximal ist.

2. Verfahren nach Anspruch 1, dadurch gekennzeichnet, daß die Berechnung der Maßzahl S und die entsprechende Auswahl für jedes Bild nur für eine oder mehrere vorgegebene Teilmengen (ROI) von Binärbildpunkten erfolgt.

3. Verfahren nach Anspruch 2, dadurch gekennzeichnet, daß mehrere Teilmengen (ROI) nach unterschiedlichen Kriterien vorgegeben werden.

4. Verfahren nach Ansprüchen 2 und 3, dadurch gekennzeichnet, daß eine Montage der Teilmengen (ROI) und eines zugehörigen Restbildes mit einer vorgegebenen Standard-Binarisierungscharakteristik zu einem Gesamtbild erfolgt.

5. Verfahren nach Ansprüchen 1 bis 4, dadurch gekennzeichnet, daß die Quantisierungscharakteristik als Paramter Mittel-, Minimal-, Maximalwert, Kontrast sowie vorgegebene Rauschschwellen zur Rauschunterdrückung der Grauwert-Pixeldaten aufweist.

6. Vorrichtung zur Binarisierung von Pixeldaten mit einer Binärdatenquelle (1), dadurch gekennzeichnet,

daß die Binärdatenquelle (1) aus einem Satz von Grauwert-Pixeldaten eine Anzahl von schwarz-weißen Binärbildern mit jeweils unterschiedlich empfindlicher Quantisierungscharakteristik liefert,
daß eine Analysevorrichtung (8) vorgesehen ist, um für jedes der n Binärdatenbilder eine Maßzahl

$$S = \frac{FS}{\ddot{U}}$$

zu bilden, wobei FS die Anzahl der schwarzen Binärbildpunkte und Ü die Anzahl der schwarz-weiß-Übergänge bezeichnet,
daß eine Auswertungsvorrichtung (10) vorgesehen ist, um aus der Menge der Binärdatenbilder dasjenige mit der maximalen Maßzahl S auszuwählen.

7. Vorrichtung nach Anspruch 6, dadurch gekennzeichnet, daß ein Bildspeicher (7) vorgesehen ist, in den die n Binärdaten zwischengespeichert werden und aus dem die Daten der Analysenvorrichtung (8) zugeführt werden.

8. Vorrichtung nach Anspruch 6 oder 7, dadurch gekennzeichnet, daß ein Detektor-Modul (2) zur Auswahl einer vorgegebenen Teilmenge (ROI) von Binärdatenpunkten vorgesehen ist.

**Claims**

1. A method of binarizing pixel data, characterised in that a number of black-white binary images, each having a binarization characteristic of different sensitivity, is formed from a set of grey-scale value pixel data,
that for each of these binary images the measured value

$$S = \frac{FS}{\ddot{U}}$$

is calculated, where FS is the number of black binary picture elements and Ü is the number of black-white transitions,
and that the binary image for which the measured value S is the maximum is selected as optimal.

2. A method according to Claim 1, characterised in that the calculation of the measured value S and the corresponding selection for each image are carried out only for one or more predetermined sub-sets (ROI) of binary picture elements.

3. A method according to Claim 2, characterised in that a plurality of sub-sets (ROI) are predetermined in accordance with different criteria.

4. A method according to Claims 2 and 3, characterised in that the sub-sets (ROI) and an associated residual image with a predetermined standard binarization characteristic are assembled to form a total image.

5. A method according to Claims 1 to 4, characterised in that the quantisation characteristic has the parameters of average value, minimum value, maximum value, contrast and predetermined noise thresholds for the noise suppression of the grey-scale value pixel data.

6. A device for the binarization of pixel data with a binary data source (1), characterised in that from a set of grey-scale value pixel data the binary data source (1) supplies a number of black-white binary images each having a quantization characteristic of different sensitivity,
that an analysis device (8) is provided for the formation of a measured value

$$S = \frac{FS}{\ddot{U}}$$

for each of the n binary data images, where FS is the number of black binary picture elements and Ü is the number of black-white transitions,
and that an analysis device (10) is provided for selecting from the set of binary data images the image with the maximum measured value S.

7. A device according to Claim 6, characterised in that an image memory (7) is provided in which the n binary data are intermediately stored and from which the data are supplied to the analysis device (8).

8. A device according to Claim 6 or 7, characterised in that a detector module (2) is provided for selecting a predetermined sub-set (ROI) of binary data elements.

## Revendications

1. Procédé pour coder en binaire des données d'éléments d'images, caractérisé en ce que l'on forme à partir d'un ensemble de données d'éléments d'images de valeurs de gris un nombre d'images binaires en noir et blanc ayant chacune une caractéristique de codage binaire de sensibilité différente, en ce que l'on calcule la cote dimensionnelle

$$S = \frac{FS}{\ddot{U}}$$

pour chacune de ces images binaires, FS désignant le nombre de points d'image binaire noirs et Ü désignant le nombre de transitions noir-blanc, en ce que l'on sélectionne l'image binaire au mieux en sélectionnant celle pour laquelle la cote S dimensionnelle est maximum.

2. Procédé suivant la revendication 1, caractérisé en ce que l'on n'effectue le calcul de la cote S dimensionnelle et la sélection correspondante pour chaque image que pour une quantité partielle ou plusieurs quantités (ROI) partielles prescrites de points d'images binaires.

3. Procédé suivant la revendication 2, caractérisé en ce que l'on prescrit plusieurs quantités (ROI) partielles suivant des critères différents.

4. Procédé suivant les revendications 2 et 3, caractérisé en ce que l'on effectue un montage en une image globale des quantités (ROI) partielles et d'une image restante associée ayant une caractéristique de codage en binaire standard prescrite.

5. Procédé suivant les revendications 1 à 4, caractérisé en ce que la caractéristique de quantification comporte comme paramètres une valeur moyenne, une valeur minimum, une valeur maximum ainsi que des ondes de bruit prescrites pour la suppression du bruit des données d'éléments d'images de valeur de gris.

6. Dispositif pour coder en binaire des données d'éléments d'images, comportant une source (1) de données binaires, caractérisé en ce que la source (1) de données binaires fournit, à partir d'un ensemble de données d'éléments d'images de valeur de gris, un nombre d'images binaires en noir et blanc ayant chacune une caractéristique de quantification de sensibilité différente, en ce qu'il est prévu un dispositif (8) d'analyse pour former une cote

$$S = \frac{FS}{\ddot{U}}$$

dimensionnelle pour chacune des n images de données binaires, FS désignant le nombre des points d'images binaires noirs et Ü le nombre des transitions noir-blanc, en ce qu'il est prévu un dispositif (10) d'exploitation pour sélectionner dans la quantité des images de données binaires celle qui a la cote S dimensionnelle maximum.

7. Dispositif suivant la revendication 6, caractérisé en ce qu'il est prévu une mémoire (7) d'images dans laquelle les n données binaires sont mises en mémoire intermédiaire et de laquelle les données sont envoyées au dispositif (8) d'analyse.

8. Dispositif suivant la revendication 6 ou 7, caractérisé en ce qu'il est prévu un module (2) détecteur pour sélectionner une quantité (ROI) partielle prescrite de points de données binaires.

# FIG.1

# FIG.2

Graubild

1

| Mittelwert-Berechnung im lokalen Umfeld | Pixelspeicher | Minimalwert-, Maximalwert-, Kontrast-Berechnung im erweiterten Umf. |
|---|---|---|

4    6    5

n fach Quantisierung

1    2    ---    n

n Binärbilder

# FIG.3

$P_i$

Weißschwelle WS
in % von $MAX_K$

weiß

K

empfindliche Kennlinie

unempfindliche Kennlinie

aktueller
Pixelwert

schwarz

aktueller
Mittelwert

absolute
Schwarzschwelle Ssw

MW

# FIG.4

100

WS
in %
$MAX_K$

$MAX_K$    255

# FIG.5

Herrn
Bernd Klein
Jakobstr. 10
7760 Radolfzell

12    11

# FIG.6

Spalten+Zeilenrichtung          Spaltenrichtung          Zeilenrichtung

$S$

# FIG.7

1    2    3  --- n

# FIG.8

Herrn
Bernd Klein
Jakobstr. 10

7760 Radolfzell

a) S = 1,19

Herrn
Bernd Klein
Jakobstr.10

7760   Radolfzell

b) S = 1,48

Herrn
Bernd Klein
Jakobstr. 10

7760   Radolfzell

c) S = 1,87

Herrn
Bernd Klein
Jakobstr. 10

7760   Radolfzell

d) S =1,64

11

# FIG.9

Montierwerk 9'

Bildspeicher

ROI k  8'

Analysewerk k

ROI3

Analysewerk 3

ROI2

Analysewerk 2

ROI1

Analysewerk 1

n n n n

2

K1 K2 K3 K k

Steuerung

10'